# EUROPEAN PATENT SPECIFICATION

(11) **EP 2 858 943 B1**
(45) Date of publication and mention of the grant of the patent: **05.04.2017**
(21) Application number: 13723819.2
(22) Date of filing: 22.05.2013
(51) Int. Cl.: C01B 3/36, C01B 3/38

(54) **A PROCESS FOR GAS-HEATED REFORMING OF A HYDROCARBON SOURCE AND A RELATED PLANT**
VERFAHREN ZUR GASERWÄRMTEN REFORMIERUNG EINER KOHLENWASSERSTOFFQUELLE UND ZUGEHÖRIGE ANLAGE
PROCÉDÉ DE REFORMAGE CHAUFFÉS AU GAZ D'UNE SOURCE D'HYDROCARBURE ET INSTALLATION ASSOCIÉE

(30) Priority: 06.06.2012 EP 12171040
(43) Date of publication of application: 15.04.2015
(73) Proprietor: Casale SA, 6900 Lugano (CH)
(72) Inventor: GERMANI, Gabriele, Stockton-On-Tees, TS19 7JE (GB); RIZZI, Enrico, I-22070 Casnate con Bernate (CO) (IT)
(74) Representative: Zardi, Marco
(86) International application number: PCT/EP2013/060524
(87) International publication number: WO 2013/182425

(56) References cited:
- EP-A1- 0 361 648
- WO-A1-2008/146052
- GB-A- 2 372 462
- US-A1- 2001 023 034
- US-A1- 2009 126 272
- NIJEMEISLAND M ET AL: "Catalyst design by CFD for heat transfer and reaction in steam reforming", CHEMICAL ENGINEERING SCIENCE, OXFORD, GB, vol. 59, no. 22-23, 1 November 2004 (2004-11-01), pages 5185-5191, XP004668431, ISSN: 0009-2509, DOI: 10.1016/J.CES.2004.07.088
- Anthony G Dixon: "COMPARISON OF CATALYST GEOMETRIES USING COMPUTATIONAL FLUID DYNAMICS FOR METHANE STEAM REFORMING", WORCESTER POLYTECHNIC INSTITUTE, 1 April 2010 (2010-04-01), XP055314338, Retrieved from the Internet: URL:https://web.wpi.edu/Pubs/E-project/Ava ilable/E-project-042510-160247/unrestricte d/MQP.pdf [retrieved on 2016-10-26]
- MARC J LEDOUX AND CUONG PHAM-HUU: "Silicon carbide: a novel catalyst support for heterogeneous catalysis", CATTECH, BALTZER SCIENCE PUBLISHERS, AMSTERDAM, NL, vol. 5, no. 4, 1 January 2001 (2001-01-01) , pages 226-246, XP007917065, ISSN: 1384-6566, DOI: 10.1023/A:1014092930183

## Description

A process for gas-heated reforming of a hydrocarbon source and a related plant.

### Field of application

The invention relates to reforming of a hydrocarbon source with a gas-heated reformer, for example steam reforming of natural gas or steam methane reforming.

### Prior art

Reforming is a well known technique for converting a hydrocarbon source into a useful product. Steam reforming of natural gas or substitute natural gas (SNG) is a common way to convert methane to a synthesis gas containing carbon monoxide (CO) and hydrogen (H₂). Said synthesis gas can be directed to a particular use such as, for example, make-up gas for the synthesis of ammonia.

Publication EP0361648 A1 discloses a method and apparatus for steam reforming in a shell-and-tube reformer. A typical prior-art layout includes a gas-heated reformer (GHR) in combination with an autothermal reformer (ATR). The GHR is basically a tubular gas-gas heat exchanger, comprising a bundle of tubes filled with a catalyst. The tubes are normally made of high nickel alloys.
A first stage of the reforming process takes place in the tubes of the GHR which are externally heated by the reformed syngas coming from the ATR. The partially reformed product gas leaving the tube side of the GHR enters the burner of the ATR together with process air or oxygen for combustion. A second stage of reforming takes place in the catalytic bed of the ATR, and the fully reformed product gas leaving the ATR is then fed to the shell side of the GHR, acting as the heating medium of tubes as above mentioned.

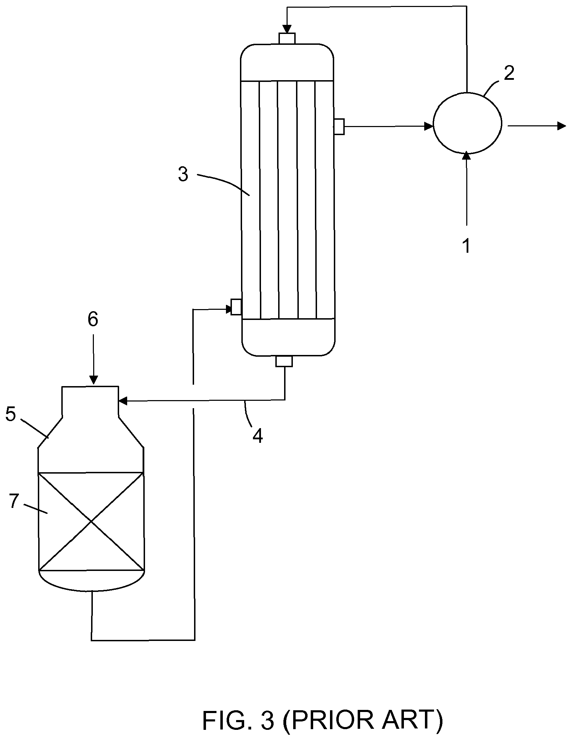

Fig. 3 shows an example of such prior-art layout. Natural gas and process steam in the current 1 are preheated in a heat exchanger 2 and fed to the catalyst-filled tubes of a gas-heated reformer 3. The partially reformed gas 4 is fed to the burner of an autothermal reformer 5 together with process air 6. The combustion produces the heat necessary to complete the reforming reactions in the catalytic part 7 of the autothermal reformer. The reformed syngas 8 then passes through the shell side of the reformer 3 and provides the heat for the reforming of the natural gas and steam flowing inside tubes. The residual heat of syngas 8 is then used to preheat the feed gas.

A disadvantage of this arrangement is that the metal tubes of the GHR are exposed to an aggressive CO-rich gaseous current, namely the reformed product coming from the ATR and circulating in the shell side. It has been noted that metal dusting occurs mainly in a temperature range of 400 - 800 °C and, consequently, it is generally recommended to avoid as much as possible the operation of the tube bundle in such range. This however introduces a significant constraint in terms of process optimization.

Another disadvantage is the poor effectiveness of the catalyst, which is typically below 10%, being affected by the process of diffusion of the feed gas into the catalyst pores. This low effectiveness means that 90% or more of the catalyst is, in practice, not used.

Further to the above, there is an incentive to decrease the temperature difference between shell and tube side of the reformer, in order to use the heat generated in the ATR more efficiently. This could be achieved by reducing the overall heat transfer resistance of the system.

### Summary of the invention

The aim of the invention is improve the above described process and to overcome the above drawbacks. An aspect of the invention is the use of catalyst-coated tubes instead of catalyst-filled tubes in the GHR. Another aspect of the invention is the provision of a catalytic surface on both inner and outer side of tubes, to that also the shell side of the GHR is catalytically active.

Accordingly, the aims of the invention are reached with a process comprising the following steps:
- a first stage of reforming of a source gas containing a hydrocarbon source is carried out by feeding the source gas into a plurality of externally heated tubes, which form a tube side of a reformer, where at least a portion of the inner surface of said tubes is catalytically active, thus producing a primarily reformed first product gas; wherein the tubes are ceramic tubes made of sintered silicon carbide;
- a partial combustion of said first product gas is effected with a suitable oxidation agent, thus obtaining a second product gas, and
- a second stage of reforming of said second product gas is carried out in a shell side of said reformer, by contact with the outer surface of said tubes, at least a portion of said outer surface of the tubes being catalytically active, and said second product gas also providing the external heating of said tubes and heat input for the first-stage reforming of the source gas.

Said step of partial combustion of the first product gas takes place preferably in a burner. Said burner can be either external or internal to said reformer; accordingly, the partially reformed gas after combustion is reintroduced in the reformer, now in the shell side, to complete the reforming process.

Technical ceramic materials with a high thermal conductivity will be selected. In the invention, the tubes are made of sintered silicon carbide (SiC).

The tubes have an inner surface and an outer surface which are catalytically active for the reforming process. The catalyst of the inner surface and outer surface can be the same or different.

The catalytically active surface can be obtained with a suitable process which is preferably selected among catalyst washcoating; impregnation; CVD (Chemical Vapor Deposition); PVD (Physical Vapor Deposition). This list however is not exhaustive and other suitable processes could be used.

According to different embodiments of the invention, the inner surface of tubes is catalytically active, either fully (i.e. from inlet to outlet) or partially.

The outer surface of tubes can be fully or partially active as well. In those embodiments where the catalytically-active inner and/or outer surface of tubes extends over a portion of the length of the tubes, only a section of the tube side and/or shell side of the reformer is catalytically active. A non-catalytic portion of inner or outer surface of tubes will act substantially as the surface of a gas-gas heat exchanger, between the hot product gas outside tubes and the process gas inside tubes. A related advantage can be the reduction of the duty of an external feed/effluent heat exchanger, as will be explained hereinbelow.

Preferably the extent of the catalytically active portion of the tubes on the shell side is determined in order for the gas to be balanced at a desired equilibrium temperature. Said temperature is preferably in the range 800-1000 °C.

Another aspect of the invention is an equipment for carrying out the above process, comprising:
a feed line of a hydrocarbon source;
a gas-heated tube reformer including a plurality of tubes which form the tube side of said reformer, which is in communication with said feed line, at least a portion of the inner and outer surfaces of said tubes being catalytically active for reforming;
a burner disposed to receive a primarily reformed product gas leaving said tubes and an oxidation agent, and
a flow line arranged to introduce a flow of combusted gas leaving said burner into the shell side of said reformer for contact with the catalytically active outer surface of said tubes.

The advantages of the invention are now briefly discussed. An advantage of the invention is a better heat exchange coefficient with the catalyst. As a consequence, the reformer according to the invention operates with a smaller temperature difference between the shell side and the tube side, compared to the prior art. The heat transfer is more efficient, especially in the first stage of reforming (inside tubes) since the catalyst is in direct contact with the tube inner surface, so that the conventional tube-to-gas and gas-to-catalyst heat transfer steps are removed. In addition, the pressure drop suffered by the process gas through the tubes is reduced.

The problem of metal dusting of tubes is overcome with the use of the ceramic tubes, according to a preferred embodiment. The reformer with ceramic tubes can operate also in those temperature ranges which are forbidden to conventional steel-tube reformers and hence gives more flexibility to operation of the whole plant. The only surfaces exposed to metal dusting are the tube sheets and the inner surfaces of the pressure vessel, which can be protected with thermal spray coatings or lined with a refractory material.

In some embodiments of the invention, the tubes may be replaceable. Embodiments with replaceable tubes have an additional advantage in that the catalyst can be replaced by re-tubing of the reformer, because the catalyst is physically part of the tubes themselves. Tubes with exhausted catalyst can be removed to regenerate the catalyst and then re-inserted into the pressure vessel, or replaced with another set of tubes with fresh catalyst. The reformer can be designed to facilitate extraction of old tubes and reinsertion of regenerated or new tubes.

In a preferred embodiments, the tubes of the reformer are simply supported by the tube sheets, that is with no permanent joint (e.g. welding) between the tubes and the tube sheets or other parts of the reformer. A simple joint between a tube and a tube sheet can be made, in some embodiments, by forming suitable receptacles in the tube sheets and simply inserting the end portion of the tubes into said receptacles without welded joints or the like. For example tapered tube ends that can be fitted into tapered sockets of the tube sheets; other applicable joints include conical or spherical joints, or equivalent.

When ceramic tubes are adopted, said simple joints avoid the drawbacks of ceramic-to-metal boding which has discouraged so far the use of ceramic tubes. It has to be noted that the tube bundle and tube sheets will remain in place under their own weight in a vertical reformer; moreover, in most cases the gas pressure will help keeping the stability of the system, since the pressure in the tube side is generally higher than in the shell side and, hence, the gas pressure will force the upper tube sheet downwards.

Another significant advantage is that the second stage of the reforming process which conventionally takes place in the ATR, is now performed in the shell side of the reformer. The tube reformer of the present invention operates as all-in-one reactor replacing both the reformer and ATR of a conventional layout. In other words, the catalyst on the outer surface of tubes will perform the same function of the catalytic bed of a conventional ATR. As a consequence, the equipment is more efficient and less expensive.

Further preferred features are the following. The tubes can be fitted with internal means (e.g. swirlers) adapted to increase the turbulence and/or the velocity of the gas, in order to enhance the mass transfer from the gas phase to the catalytic surface. In other embodiments, the shell side can be fitted with baffles in order to enhance the heat or heat and mass transfer to the tubes.

These advantages will be more evident with the help of the following detailed description.

### Description of the figures

Fig. 1 is a scheme of an equipment for reforming a hydrocarbon source according to the invention.
Fig. 2 is a schematic longitudinal section of a tube of the reformer of the equipment of Fig. 1, according to a preferred embodiment.
Fig. 3 is a prior-art layout.

### Detailed description of a preferred embodiment

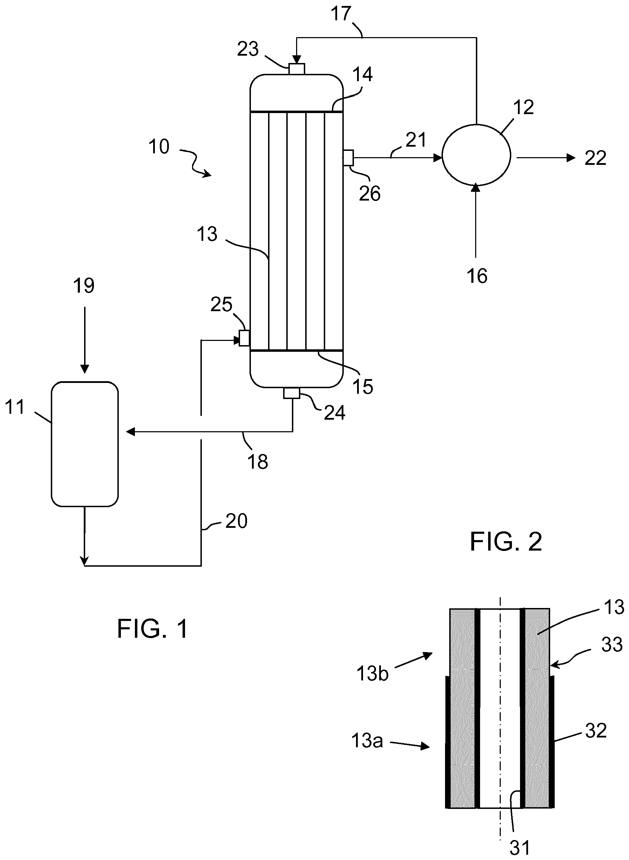

Referring to Fig. 1, an equipment for steam reforming comprises a reformer 10, a burner 11 and a pre-heater 12. The reformer 10 comprises a bundle of tubes 13 which are preferably made of a ceramic material. The tubes 13 are preferably straight tubes supported by two opposite tube sheets 14, 15.

The reformer 10 has the following main connections: a gas inlet 23 and gas outlet 24 for communication with the tube side (namely with inner of tubes 13); a gas inlet 25 and gas outlet 26 for connection with the shell side. Preferably, as shown, the tube-side gas inlet 23 is at the top of the reformer and the tube-side outlet 24 is at the bottom; the shell-side inlet 25 is in the lower part and the shell-side outlet 26 is in the upper part of the shell. However, different arrangements are possible.

A source gas 16, including a hydrocarbon source and steam, is heated in the pre-heater 12 and enters the reformer 10 via line 17 connected to the tube-side gas inlet 23. The process gas is distributed in the tubes 13, which have a catalytically active inner surface and are externally heated by the process gas 20 flowing in the shell side of the reformer, as explained below. The hydrocarbon source in the process gas 16 is preferably methane (CH₄). The source gas 16 for example is natural gas added with steam.

A first stage of catalytic steam reforming of the fresh gas feed takes place inside tubes 13. Part of the methane contained in the source gas is then converted into carbon oxide (CO) and hydrogen (H₂).

A partially reformed process gas 18, still having a relevant content of methane, leaves the tubes 13 and reformer 10 via the gas outlet 24, and is directed to the burner 11 which, in this example, is outside the reformer 10. The burner 11 receives a flow 19 of an oxidation agent, which can be for example process air or enriched air or oxygen, and provides a partial combustion of said gas 18. In Fig. 1 the burner 11 is shown as a separate item but, in some embodiments, said burner can be integrated with the reformer 10.

The product leaving the burner 11 is the hot gas stream 20 which is sent back to the reformer 10 and is introduced in the shell side of said reformer via the shell-side gas inlet 25. By contacting the catalytically active outer surface of tubes 13, the process gas 20 is further reformed in such a way that the desired reforming of the hydrocarbon source originally contained in stream 16 is completed.

Furthermore, the process gas 20 furnishes the heat for the simultaneous first stage of reforming of the stream 17 flowing inside the tubes 13. In other words, the process gas 20 acts as the external heat source for the endothermic first stage of reforming.

The reformed gas 21 at the shell-side outlet 26, now containing mainly CO and H₂, is cooled in the pre-heater 12 furnishing the heat for pre-heating of the source gas 16. The gas 22 leaving the hot side of pre-heater 12 is then directed to further treatment, e.g. purified and possibly added with nitrogen for use as ammonia make-up gas.

An exemplificative embodiment of a ceramic tube 13 with catalytic surfaces is shown in Fig. 2. The scale of Fig. 2 is obviously altered for the purpose of graphical representation.

The ceramic tube 13 has an inner catalytic washcoat 31 and an outer catalytic washcoat 32. The catalyst of washcoat 31 and, respectively, washcoat 32 is adapted for the reforming of the fresh gas 17 and completion of reforming of hot gas 20 coming from the burner. The catalyst of coatings 31 and 32 can be the same or different.

The outer washcoat 32 covers only a portion of tube 30, which in this example is the lower portion assuming that the process gas 20 enters at the bottom inlet 25 of the reformer, as in Fig. 2. The washcoat 32 leaves uncoated upper portion 33 of the outer surface of tubes. Correspondingly, the outer surface of the tube bundle, in this example, has a lower portion 13a which is catalytically active for the process gas 20 in the shell side (i.e. takes part in the catalytic reforming), and an upper portion 13b which is not catalytically active because the tubes are not coated. The bundle of tubes is designed in such a way that the full reforming is achieved while the gas 20 flows through the lower portion 13a, and the remaining portion 13b substantially acts as a heat exchanger.

In some embodiments, the inner surface of tubes 13 is partially active. For example, referring to Fig. 1, an upper portion of tubes closer to inlet 23 can be made without the internal catalytic washcoat, and will act as a heat exchanger between unreacted fresh gas 17 in the tube side, and hot effluent 20 in the shell side. This way, a portion of the duty of the feed/effluent heat exchanger 16 can be transferred directly to the reformer 10.

## Claims

1. A process for reforming of a source gas containing a hydrocarbon source, comprising the steps of:
- a first stage of reforming of said source gas (16) by feeding the source gas into a plurality of externally heated tubes (13), which form a tube side of a reformer (10), at least a portion of the inner surface of said tubes being catalytically active, thus producing a primarily reformed first product gas (18), said tubes being ceramic tubes made of sintered silicon carbide;
- a partial combustion of said first product gas, which is effected with a suitable oxidation agent, thus obtaining a second product gas (20), and
- a second stage of reforming of said second product gas, which is carried out in a shell side of said reformer, by contact with the outer surface of said tubes, at least a portion of said outer surface of the tubes being catalytically active, and said second product gas also providing the external heating of said tubes and heat input for the first-stage reforming of the source gas.

2. A process according to claim 1, where said partial combustion of said first product gas (18) takes place in a burner (11) external or internal to said reformer (10).

3. A process according to any of the preceding claims, the process being a steam reforming process and said source gas (16) comprising steam and a hydrocarbon source.

4. A process according to claim 3, the hydrocarbon source being natural gas or methane.

5. An equipment for reforming of a source gas containing a hydrocarbon, particularly for the steam reforming of natural gas or methane, comprising:
- a feed line of a gas to be reformed,
- a gas-heated tube reformer (10) including a plurality of tubes which form the tube side of said reformer, which is in communication with said feed line, at least a portion of the inner surface of said tubes and at least a portion of the outer surface of said tubes being catalytically active for reforming, said tubes being ceramic tubes made of sintered silicon carbide;
- a burner (11) disposed to receive a partially reformed product gas (18) leaving said tubes and an oxidation agent, and
- a flow line arranged to bring a product gas (20) leaving said burner into the shell side of said reformer for contact with the catalytically active outer surface of said tubes and completion of the reforming process.

6. An equipment according to claim 5, said burner (11) being integrated with said reformer.

7. An equipment according to any of claims claim 5 to 6, where the catalytically active inner surface and/or the catalytically active outer surface of tubes is extended over a portion of the length of said tubes, thus leaving a non-catalytic portion of the inner and/or outer surface (33).

8. An equipment according to any of claims 5 to 7, said inner and outer surfaces of the tubes being catalytically active by means of a coating (31, 32) or impregnation with a suitable catalyst.

9. An equipment according to any of claims 5 to 8, said reformer (10) having replaceable tubes, and said replaceable tubes being simply supported by tube sheets of the reformer.

## Patentansprüche

1. Verfahren zum Reformieren eines Quellengases, das eine Kohlenwasserstoffquelle enthält, wobei das Verfahren folgende Schritte aufweist:
- eine erste Stufe des Reformierens des Quellengases (16) unter Zuführen des Quellengases in eine Mehrzahl von außen beheizten Rohren (13), die eine Rohrseite eines Reformers (10) bilden, wobei zumindest ein Teil der inneren Oberfläche der Rohre katalytisch aktiv ist, um dadurch ein primär reformiertes erstes Produktgas (18) zu erzeugen, wobei es sich bei den Rohren um keramikrohre aus gesintertem Siliziumkarbid handelt;
- eine teilweise Verbrennung des ersten Produktgases, die mit einem geeigneten Oxidationsmittel durchgeführt wird, um dadurch ein zweites Produktgas (20) zu erhalten, und
- eine zweite Stufe des Reformierens des zweiten Produktgases, die auf einer Mantelseite des Reformers durchgeführt wird unter Kontakt mit der äußeren Oberfläche der Rohre, wobei zumindest ein Teil der äußeren Oberfläche der Rohre katalytisch aktiv ist und das zweite Produktgas auch die äußere Beheizung der Rohre und die Wärmezufuhr für das in der ersten Stufe erfolgende Reformieren des Quellengases bereitstellt.

2. Verfahren nach Anspruch 1,
wobei die teilweise Verbrennung des ersten Produktgases (18) in einem Brenner (11) stattfindet, der extern oder intern von dem Reformer (10) angeordnet ist.

3. Verfahren nach einem der vorhergehenden Ansprüche,
wobei das Verfahren ein Dampf-Reformierungsprozess ist und das Quellengas (16) Dampf und eine Kohlenwasserstoffquelle aufweist.

4. Verfahren nach Anspruch 3,
wobei die Kohlenwasserstoffquelle Erdgas oder Methan ist.

5. Anlage zum Reformieren eines Quellengases, das einen Kohlenwasserstoff enthält, insbesondere für die Dampf-Reformierung von Erdgas oder Methan, aufweisend:
- eine Zuführleitung für ein zu reformierendes Gas;
- einen gasbeheizten Rohr-Reformer (10) mit einer Mehrzahl von Rohren, die die Rohrseite des Reformers bilden, der mit der Zuführleitung in Verbindung steht, wobei zumindest ein Teil der inneren Oberfläche der Rohre und zumindest ein Teil der äußeren Oberfläche der Rohre für die Reformierung katalytisch aktiv sind, wobei es sich bei den Rohren um Keramikrohre aus gesintertem Siliziumkarbid handelt;
- einen Brenner (11), der dafür angeordnet ist, ein die Rohre verlassendes, teilweise reformiertes Produktgas (18) sowie ein Oxidationsmittel zu empfangen, und
- eine Strömungsleitung, die dazu ausgebildet ist, ein den Brenner verlassendes Produktgas (20) auf die Mantelseite des Reformers zu bringen zum Herstellen eines Kontakts mit der katalytisch aktiven äußeren Oberfläche der Rohre sowie zum Abschließen des Reformierungsprozesses.

6. Anlage nach Anspruch 5,
wobei der Brenner (11) mit dem Reformer integriert ausgebildet ist.

7. Anlage nach einem der Ansprüche 5 bis 6,
wobei die katalytisch aktive innere Oberfläche und/oder die katalytisch aktive äußere Oberfläche der Rohre über einen Teil der Länge der Rohre fortgeführt ist, so dass ein nicht-katalytischer Bereich der inneren und/oder äußeren Oberfläche (33) verbleibt.

8. Anlage nach einem der Ansprüche 5 bis 7,
wobei die inneren und äußeren Oberflächen der Rohre mit Hilfe einer Beschichtung (31, 32) oder Imprägnierung mit einem geeigneten Katalysator katalytisch aktiv sind.

9. Anlage nach einem der Ansprüche 5 bis 8,
wobei der Reformer (10) auswechselbare Rohre aufweist und die auswechselbaren Rohre einfach durch Rohrböden des Reformers abgestützt sind.

## Revendications

1. Procédé de reformage d'un gaz source contenant une source hydrocarbonée, comprenant :
- une première phase de reformage dudit gaz source (16) par alimentation du gaz source dans une pluralité de tubes chauffés par l'extérieur (13), qui forment un côté tube d'un reformeur (10), au moins une portion de la surface interne desdits tubes étant catalytiquement active, ce qui permet de produire ainsi un premier produit gazeux reformé initialement (18), lesdits tubes étant des tubes en céramique constitués de carbure de silicium fritté ;
- une combustion partielle dudit premier produit gazeux, qui est effectuée avec un agent d'oxydation approprié, ce qui permet d'obtenir ainsi un second produit gazeux (20), et
- une deuxième phase de reformage dudit second produit gazeux, qui est réalisée d'un côté enveloppe dudit reformeur, par contact avec la surface externe desdits tubes, au moins une portion de ladite surface externe des tubes étant catalytiquement active, et ledit second produit gazeux fournissant ainsi le chauffage externe desdits tubes et l'entrée de chaleur pour le reformage de première phase du gaz source.

2. Procédé selon la revendication 1, dans lequel ladite combustion partielle dudit premier produit gazeux (18) a lieu dans un brûleur (11) externe ou interne audit reformeur (10).

3. Procédé selon l'une quelconque des revendications précédentes, le procédé étant un procédé de reformage vapeur et ledit gaz source (16) comprenant de la vapeur et une source hydrocarbonée.

4. Procédé selon la revendication 3, la source hydrocarbonée étant du gaz naturel ou du méthane.

5. Équipement pour le reformage d'un gaz source contenant un hydrocarbure, en particulier pour le reformage vapeur d'un gaz naturel ou du méthane, comprenant :
- une ligne d'alimentation d'un gaz à reformer,
- un reformeur à tubes chauffés au gaz (10) comprenant une pluralité de tubes qui forment le côté tube dudit reformeur, qui est en communication avec ladite ligne d'alimentation, au moins une portion de la surface interne desdits tubes et au moins une portion de la surface externe desdits tubes étant catalytiquement actives pour le reformage, lesdits tubes étant des tubes en céramique constitués de carbure de silicium fritté ;
- un brûleur (11) disposé pour recevoir un produit gazeux partiellement reformé (18) quittant lesdits tubes et un agent d'oxydation, et
- une ligne de flux agencée pour apporter un produit gazeux (20) quittant ledit brûleur dans le côté enveloppe dudit reformeur pour contact avec la surface externe catalytiquement active desdits tubes et achèvement du procédé de reformage.

6. Équipement selon la revendication 5, ledit brûleur (11) étant intégré avec ledit reformeur.

7. Équipement selon l'une quelconque des revendications 5 et 6, où la surface interne catalytiquement active et/ou la surface externe catalytiquement active des tubes s'étend sur une portion de la longueur desdits tubes, laissant ainsi une portion non catalytique de la surface interne et/ou externe (33).

8. Équipement selon l'une quelconque des revendications 5 à 7, lesdites surfaces interne et externe des tubes étant catalytiquement actives au moyen d'un revêtement (31, 32) ou d'une imprégnation avec un catalyseur approprié.

9. Équipement selon l'une quelconque des revendications 5 à 8, ledit reformeur (10) ayant des tubes remplaçables, et lesdits tubes remplaçables étant simplement supportés par des tôles tubulaires du reformeur.
